# EUROPEAN PATENT SPECIFICATION

(11) **EP 2 285 857 B1**
(45) Date of publication and mention of the grant of the patent: **01.01.2014**
(21) Application number: 09753863.1
(22) Date of filing: 26.05.2009
(51) Int. Cl.: C08G 18/32, C08G 18/80, C09D 175/04, A01N 33/12, C08G 18/38, A01N 55/00, C08G 18/73, C08G 18/75, C09D 175/08

(54) **ANTIMICROBIAL COMPOSITION CONTAINING ANTIMICROBIALS COVALENTLY LINKED WITH POLYURETHANE-SILICA INTERPENETRATING NETWORK**
ANTIMIKROBIELLE ZUSAMMENSETZUNG MIT ANTIMIKROBIELLEN SUBSTANZEN IN KOVALENTER VERBINDUNG MIT INTERPENETRIERENDEM POLYURETHAN-SILIZIUM-NETZWERK
COMPOSITION ANTIMICROBIENNE CONTENANT DES AGENTS ANTIMICROBIENS LIÉS DE FAÇON COVALENTE À UN RÉSEAU INTERCONNECTÉ DE POLYURÉTHANE-SILICE

(30) Priority: 29.05.2008 EP 08157184
(43) Date of publication of application: 23.02.2011
(73) Proprietor: BASF SE, 67056 Ludwigshafen (DE)
(72) Inventor: MANIVANNAN, Ramanujachary, Singapore 118174 (SG); THEVIGHA, S., Singapore 350121 (SG); FECHTENKÖTTER, Andreas, Singapore 098647 (SG)
(86) International application number: PCT/EP2009/056345
(87) International publication number: WO 2009/144208

(56) References cited:
- WO-A1-2006/102366
- US-A- 4 614 675
- US-A1- 2005 137 322

## Description

The invention relates generally to antimicrobial compositions, their manufacture and their use for coating surfaces, especially interior applications.

Coating applications are becoming increasingly more demanding in terms of performance, safety and environmental compliance. Coatings based on isocyanates and binders, i.e., components containing hydrogen atoms reactive to isocyanates, in the following referred to as polyurethane coatings, are known to provide high chemical resistance, flexibility, abrasion resistance, weathering and impact resistance. The protection afforded by such coatings is of particular significance in the automotive, construction, marine and chemical sectors.

Polyurethane coatings or films can for instance be made by reacting multifunctional hydroxyl or amino group containing compounds (polyols or polyamines) and multifunctional isocyanates (polyisocyanates) by means of an isocyanate addition polymerization process. The reaction between the isocyanate groups (NCO) and the active hydrogen atoms of the binder is usually accelerated by the means of catalysts.

Generally a distinction can be made between one-component (1K) and two-component (2K) coating materials. Two-component coating materials are not mixed until shortly before application and thus have only a limited processability time. Systems of this kind are distinguished by rapid curing after the components have been mixed. One-component systems, in contrast, have a long pot life (i.e., the length of time that a catalyzed resin system retains a viscosity low enough to be used in processing). This has been achieved to date, for example, by blocking the NCO groups. But when such coatings are cured, the blocking agents escape.

Two-component curable mixtures comprising polyisocyanates and binders, in particular binders based on polyols or polyamines, are well-known in the art to provide excellent performance and cure at low temperatures.

There is a need in the art to apply antimicrobial agents to compositions and coated surfaces.

It has been known to coat medical devices for example with silver or silver salts, US-A-5395651. Another approach to provide antimicrobial surfaces has been the use of organic antimicrobial agents such as biguanides, US-A-4999210, 5013306 and 5707366. The use of alumino-silicates or zeolites that contain ions of certain metals has been known for example from US-A-452410 and 5556699. It has been known from US-A-6596401 to use a composition comprising a silane copolymer and an antimicrobial agent wherein the copolymer is the reaction product of at least one polyisocyanate, an organo-functional silane and a polyol.

It is known from WO 2006/102366 to prepare coatings having sustained antimicrobial properties by using a polymerizable silicone-containing quaternary ammonium salt monomer and copolymerising siad compound with another monomer or polymer. However WO 2006/102366 does not disclose a silica network covalently bound to both a polyurethane and an antimicrobial agent.

It is an object of the present invention to provide a composition with improved antimicrobial properties.

It was yet another object of the present invention to provide curable compositions based on isocyanates leading to coatings with high antimicrobial properties. The coatings furthermore ought to be resistant to chemicals and weathering. The corresponding surface ought to be of high optical quality. The coatings ought to exhibit sufficient flame retardancy and excellent mechanical performance characteristics.

It was yet another object of the present invention to provide coatings exhibiting low VOC (volatile organic component). In particular, the VOC due to any catalyst ought to be zero. The composition ought to contain no volatile heavy metal compounds, in particular no volatile organometallic compound. The catalyst used to promote the curing reaction ought to exhibit low toxicity and ought to be less sensitive to hydrolysis.

In addition, for coating compositions, especially clearcoat or topcoat compositions, it is desired that the coating have a high degree of scratch resistance to protect the appearance of the coating system as a whole.

The present invention provides a coating composition, which has improved antimicrobial properties. The composition as provided herein also provides excellent performance characteristics at low temperatures and has an extended pot life.

The composition according to this invention is obtainable by reacting in a first step
at least one polyisocyanate A with
at least one binder component B with at least two isocyanatereactive groups and at least one isocyanate reactive alkoxysilane C thus obtaining a polyurethane containing siloxy groups and
subsequently, hydrolysing the siloxy groups in the polyurethane in a second step in the presence of an antimicrobial agent Z which has a siloxy moiety and condensing the hydrolized siloxy groups resulting in the formation of a silica network covalently linked to a polyurethane and to the rest of the antimicrobial agent Z.

In one preferred embodiment the composition according to this invention is obtainable by reacting per 1.1 mole of compound A
up to 1.0 mole, especially 0.1 to 0.9 mole of compound B,
up to 1.0 mole, especially 0.1 to 0.9 of compound C,

In a further embodiment the combined amount of components B and C is equimolar to component A.

In a further embodiment the polyurethane made by the above method is then combined with different weight per cent of components Z. Component Z may be varied from 1 to 10 weight % with respect to the total PU content in one preferred embodiment.

Reacting the compounds according to the present invention may be performed in many variations. In one embodiment the polyisocyanate A is reacted with both isocyanate reactive components B and C simultaneously.

In another embodiment, one or more polyols are reacted with an excess of a diisocyanate to form an isocyanate-capped polyurethane prepolymer. The formation of this prepolymer can be facilitated by employing an excess of polyisocyanate. In other words, the number of isocyanate functional groups present in the reaction mixture is greater than the number of alcohol function groups present in the reaction mixture. Preferably, the ratio of isocyanate functional groups to alcohol or other isocyanate reactive functional groups is from 1.1:1 to 2:1. More preferably, the ratio of isocyanate functional groups to alcohol functional groups is from 1.5:1 to 2:1, most preferably 1.6 to 1.8.

Then, the isocyanate-capped polyurethane-urea prepolymer is reacted with an organo-functional silane to form a polyurethane-urea-siloxane copolymer having pendant alkoxy groups. Any organo-functional silane having at least two functional groups, which may be the same or different, that are reactive with an isocyanate functional group, may be used in the process of the present invention.

The resulting polyurethane copolymer contains numerous free organic rests, especially alkoxy groups. Hydrolysis and condensing may be performed as known in the art according to US-A 6 794 527. In one embodiment hydrolysis is performed at elevated temperatures in the presence of air. The moisture in the air causes hydrolysis. The reaction of the alkoxy groups with water cleaves alcohol from the copolymer and leaves silanol groups in place of the alkoxy groups. The obtained silanol groups react with each other producing cross-links in the copolymer.

Furthermore, the present invention provides an interpenetrating network of a polyurethane and silica chemically linked via Si-containing groups comprising an antimicrobial agent covalently linked to said network.

Furthermore, the present invention provides a kit comprising a curable composition containing as separate parts
a) at least one polyisocyanate A ,
b) at least one binder component B with at least two isocyanatereactive groups and
   at least one isocyanatereactive alkoxysilane C and
c) an antimicrobial agent with a siloxy moiety.

### Isocyanate component (A)

Isocyanates suitable for the present invention are known to the person skilled in the art or can be synthesized according to methods known to the person skilled in the art.

An isocyanate for the purpose of the present invention is an organic molecule containing at least one -NCO group per molecule. If the isocyanate molecule contains two -NCO groups, it is a diisocyanate. An isocyanate containing two or more isocyanate groups or an isocyanate representing a mixture of different isocyanates, where the number average of isocyanate groups per molecule is at least 2, is referred to as polyisocyanate throughout this invention.

It is preferred if isocyanate component (A) is a polyisocyanate. Preferably isocyanate component (A) has an average number of at least 2 NCO groups per molecule (number-weighted average).

Component (A) may contain at least one oligomer of at least one diisocyanate. As parent diisocyanates preferably diisocyanates having from 4 to 20 carbon atoms are used. In principle, the parent diisocyanates can be used as such or as mixture with oligomers. Preferably, however, diisocyanates are used in oligomeric form.

Examples of conventional diisocyanates are aliphatic diisocyanates, such as tetramethylene diisocyanate, 1,5-pentamethylene diisocyanate, hexamethylene diisocyanate (1,6-diisocyanatohexane), octamethylene diisocyanate, decamethylene diisocyanate, dodecamethylene diisocyanate, tetradecamethylene diisocyanate, derivatives of lysine diisocyanate, trimethylhexane diisocyanate or tetramethylhexane diisocyanate, cycloaliphatic diisocyanates, such as 1,4-, 1,3- or 1,2-diisocyanatocyclohexane, 4,4'- or 2,4'-di(isocyanatocyclohexyl)methane, 1-isocyanato-3,3,5-trimethyl-5-(isocyanatomethyl)cyclohexane (isophoronediisocyanate), 1,3- or 1,4-bis(isocyanatomethyl)cyclohexane or 2,4- or 2,6-diisocyanato-1-methylcyclohexane, and 3(or 4),8(or 9)-bis(isocyanatomethyl)tricyclo[5.2.1.02,6]decane isomer mixtures, and aromatic diisocyanates, such as toluene 2,4- or 2,6-diisocyanate and the isomer mixtures thereof, m- or p-xylylene diisocyanate, 2,4'- or 4,4'-diisocyanatodiphenylmethane and the isomer mixtures thereof, phenylene 1,3- or 1,4-diisocyanate, 1-chlorophenylene 2,4-diisocyanate, naphthylene 1,5-diisocyanate, biphenylene 4,4'-diisocyanate, 4,4' diisocyanato-3,3'-dimethylbiphenyl, 3-methyldiphenylmethane 4,4'-diisocyanate, tetramethylxylylene diisocyanate, 1,4-diisocyanatobenzene or 4,4'-diisocyanatodiphenyl ether.

Also suitable in principle are higher isocyanates, having on average more than 2 isocyanate groups. Examples that are suitable include triisocyanates such as triisocyanatononane, 2,4,6-triisocyanatotoluene, triphenylmethane triisocyanate or 2,4,4'-triisocyanato-diphenyl ether, or the mixtures of diisocyanates, triisocyanates and higher polyisocyanates that are obtained by phosgenating corresponding aniline/formaldehyde condensates and represent polyphenyl polyisocyanates containing methylene bridges.

Cycloaliphatic and aliphatic diisocyanates are preferred. Particularly preferred are 1-isocyanato-3,3,5-trimethyl-5-(isocyanatomethyl)-cyclohexane (isophorone diisocyanate), 1,6 diisocyanatohexane, 4,4'-di(isocyanatocyclohexyl)methane, and 3(or 4),8(or 9)-bis(isocyanatomethyl)tricyclo[5.2.1.02,6]decane isomer mixtures.

Component (A) may comprise polyisocyanates and polyisocyanate-containing mixtures which contain biuret, urethane, allophanate and/or isocyanurate groups, preferably polyisocyanates containing isocyanurate groups and/or polyisocyanates containing allophanate groups. Particular preference is given to polyisocyanates comprising predominantly isocyanurate groups. With very particular preference the fraction of the isocyanurate groups corresponds to an NCO value of at least 5%, preferably at least 10%, more preferably at least 15% by weight (calculated as C₃N₃O₃ with a molar mass of 126 g/mol).

Examples of preferred polyisocyanates as component (A) include:
1) Polyisocyanates having isocyanurate groups and obtained from aromatic, aliphatic and/or cycloaliphatic diisocyanates. Particularly preferred here are the corresponding aliphatic and/or cycloaliphatic isocyanatoisocyanurates and in particular those based on hexamethylene diisocyanate and isophorone diisocyanate. The isocyanurates present are in particular trisisocyanatoalkyl or trisisocyanatocycloalkyl isocyanurates, which are cyclic trimers of the diisocyanates, or are mixtures with their higher homologs having more than one isocyanurate ring. The isocyanatoisocyanurates generally have an NCO content of from 10 to 30% by weight, in particular from 15 to 25% by weight, and an average NCO functionality of from 2.6 to 8.
2) Uretdione diisocyanates having aromatically, aliphatically and/or cycloaliphatically bonded isocyanate groups, preferably having aliphatically and/or cycloaliphatically bonded groups and in particular those derived from hexamethylene diisocyanate or isophorone diisocyanate. Uretdione diisocyanates are cyclic dimerization products of diisocyanates. The uretdione diisocyanates can be used as a sole component or as a mixture with other polyisocyanates, in particular those mentioned under 1).
3) Polyisocyanates having biuret groups and having aromatically, cycloaliphatically or aliphatically bonded, preferably cycloaliphatically or aliphatically bonded, isocyanate groups, in particular tris(6-isocyanatohexyl)biuret or mixtures thereof with its higher homologs. These polyisocyanates having biuret groups generally have an NCO content of from 18 to 22% by weight and an average NCO functionality of from 2.8 to 6.
4) Polyisocyanates having urethane and/or allophanate groups and having aromatically, aliphatically or cycloaliphatically bonded, preferably aliphatically or cycloaliphatically bonded, isocyanate groups, as can be obtained, for example, by reaction of excess amounts of hexamethylene diisocyanate or of isophorone diisocyanate with mono- or polyhydric alcohols, such as, for example, methanol, ethanol, isopropanol, n-propanol, n-butanol, isobutanol, sec-butanol, tert-butanol, n-hexanol, n-heptanol, n-octanol, n-decanol, n-dodecanol (lauryl alcohol), 2 ethylhexanol, n-pentanol, stearyl alcohol, cetyl alcohol, lauryl alcohol, ethylene glycol monomethyl ether, ethylene glycol monoethyl ether, 1,3-propanediol monomethyl ether, cyclopentanol, cyclohexanol, cyclooctanol, cyclododecanol, trimethylolpropane, neopentyl glycol, pentaerythritol, 1,4-butanediol, 1,6 hexanediol, 1,3 propanediol, 2-ethyl-1,3-propanediol, 2-methyl-1,3-propanediol, ethylene glycol, diethylene glycol, triethylene glycol, tetraethylene glycol, pentaethylene glycol, glycerol, 1,2-dihydroxypropane, 2,2-dimethyl-1,2-ethanediol, 1,2-butane-diol, 1,4-butanediol, 3-methylpentane-1,5-diol, 2-ethylhexane-1,3-diol, 2,4-diethyl-octane-1,3-diol, neopentyl glycol hydroxypivalate, ditrimethylolpropane, dipentaerythritol, 2,2-bis(4-hydroxycyclohexyl)propane, 1,1-, 1,2-, 1,3-, and 1,4 cyclohexanedimethanol, 1,2-, 1,3-, or 1,4-cyclohexanediol or mixtures thereof. These polyisocyanates having urethane and/or allophanate groups generally have an NCO content of from 12 to 24% by weight, in particular 18-24% by weight for those based on HDI, and an average NCO functionality of from 2.5 to 4.5.
5) Polyisocyanates comprising oxadiazinetrione groups, preferably derived from hexamethylene diisocyanate or isophorone diisocyanate. Such polyisocyanates comprising oxadiazinetrione groups can be prepared from diisocyanate and carbon dioxide.
6) Polyisocyanates comprising iminooxadiazinedione groups, preferably derived from hexamethylene diisocyanate or isophorone diisocyanate. Such polyisocyanates comprising iminooxadiazinedione groups can be prepared from diisocyanates by means of specific catalysts.
7) Uretonimine-modified polyisocyanates.
8) Carbodiimide-modified polyisocyanates.
9) Hyperbranched polyisocyanates, of the kind known for example from DE-A1 10013186 or DE-A1 10013187.
10) Polyurethane polyisocyanate prepolymers, from di- and/or polyisocyanates with alcohols.
11) Polyurea-polyisocyanate prepolymers.

The polyisocyanates 1) to 11) can be used as a mixture, if appropriate also as a mixture with diisocyanates.

Preference is given to polyisocyanates containing isocyanurate and/or biuret groups. In addition, these mixtures may also contain minor amounts of uretdione, biuret, urethane, allophanate, oxadiazinetrione, iminooxadiazinedione and/or uretonimine groups, preferably at less than 25% by weight in each case, more preferably less than 20% by weight in each case, very preferably less than 15% by weight in each case, in particular below 10% by weight in each case and especially below 5% by weight in each case, and very specially below 2% by weight in each case, based on the respective functional group.

Particularly preferred as isocyanates in component (A) are isocyanurates of isophorone diisocyanate having an NCO content according to DIN EN ISO 11909 of 16.7% - 17.6%, and/or an average NCO functionality of from 3.0 to 4.0, preferably from 3.0 to 3.7, more preferably from 3.1 to 3.5. Compounds of this kind containing isocyanurate groups preferably have a HAZEN/APHA color number according to DIN EN 1557 of not more than 150.

Also particularly preferred as isocyanate in component (A) is the isocyanurate of 1,6-hexamethylene diisocyanate, having an NCO content to DIN EN ISO 11909 of 21.5 - 23.5%, and/or an average NCO functionality of 3.0 to 8, preferably 3.0 to 3.7, more preferably 3.1 to 3.5. Compounds of this kind containing isocyanurate groups preferably have a color number to DIN ISO 6271 of not more than 60. Compounds of this kind containing isocyanurate groups preferably have a viscosity at 23°C to DIN EN ISO 3219 of 1000 to 20 000 mPas, preferably 1000 to 4000 mPas, at a shear rate of 1000 s⁻¹.

In one preferred embodiment the isocyanate component (A) has a total chlorine content of less than 400 mg/kg, more preferably a total chlorine content of less than 80 mg/kg, very preferably less than 60, in particular less than 40, especially less than 20, and less than 10 mg/kg even.

### Binder component (B)

Binders suitable for the present invention are known to the person skilled in the art or can be synthesized according to methods known to the person skilled in the art.

A binder for the purpose of the present invention is a compound containing at least two hydrogen atoms reactive to isocyanates. Preferably, the binder contains hydroxyl groups (OH groups) and/or primary and/or secondary amino groups.

In one embodiment of the present invention, a polyol is an organic molecule comprising an average number of at least 2 OH groups per molecule (number-weighted). Furthermore, a polyamine is an organic molecule comprising an average number of at least 2 primary or secondary (i.e., reactive) amino groups per molecule (number-weighted).

Preferably, the binder component (B) contains at least one polyol or at least one polyamine or both, at least one polyol and at least one polyamine. Particular preference is given to binder components (A) containing at least one polyol.

Component (B) preferably exhibits an OH number according to DIN 53240-2 of at least 15, preferably at least 40, more preferably at least 60, and very preferably at least 80 mg KOH/g resin solids. The OH number can be up to 350, preferably up to 240, more preferably up to 180, and very preferably up to 140 mg KOH/g resin solids.

The preferred OH numbers are also dependent on the application. According to Manfred Bock, "Polyurethane für Lacke und Beschichtungen", p. 80, Vincentz-Verlag, 1999, lower OH numbers are advantageous for effective adhesion and corrosion control. For topcoat materials, for example, use is made of polyacrylates having OH numbers of about 40 to 100; for weather-resistant coating materials, OH numbers of around 135; and for high chemical resistance, those with OH numbers of around 170 mg KOH/g resin solids are used. Polyesters for aircraft coatings have in some cases much higher OH numbers.

Examples of such preferred binders are polyacrylate polyols, polyester polyols, polyether polyols, polyurethane polyols; polyurea polyols; polyester polyacrylate polyols; polyester polyurethane polyols; polyurethane polyacrylate polyols, polyurethane-modified alkyd resins; fatty acid modified polyester polyurethane polyols, copolymers with allyl ethers, graft polymers of the stated groups of compound with, for example, different glass transition temperatures, and also mixtures of the binders stated. Particular preference is given to polyacrylate polyols, polyester polyols and polyether polyols, in particular to at least one polyacrylate polyol that contains per molecule on average at least two, preferably two to ten, more preferably three to ten, and very preferably three to eight hydroxyl groups.

Preferred OH numbers, measured in accordance with DIN 53240-2, are from 40 to 350 mg KOH/g resin solids for polyesters, preferably from 80 to 180 mg KOH/g resin solids, and from 15 to 250 mg KOH/g resin solids for polyacrylate-ols, preferably from 80 to 160 mg KOH/g.

The binders may additionally have an acid number according to DIN EN ISO 3682 of up to 200 mg KOH/g, preferably up to 150 and more preferably up to 100 mg KOH/g.

The acid number ought preferably to be at least 10, more preferably at least 80 mg KOH/g. Alternatively, it may be less than 10, so that the binder is virtually acid-free.

Polyacrylate polyols of this kind preferably have a molecular weight Mn of at least 1000, more preferably at least 2000 and very preferably at least 5000 g/mol. The molecular weight Mn may for example be up to 200 000, preferably up to 100 000, more preferably up to 80 000 and very preferably up to 50 000 g/mol.

The polyacrylate polyols are copolymers of at least one (meth)acrylic ester with at least one compound having at least one, preferably precisely one hydroxy group and at least one, preferably precisely one (meth)acrylate group.

The latter may be, for example monoesters of α,β-unsaturated carboxylic acids, such as acrylic acid, methacrylic acid (referred to in this specification for short as "(meth)acrylic acid"), with diols or polyols, which have preferably 2 to 20 C atoms and at least two hydroxy groups, such as ethylene glycol, diethylene glycol, triethylene glycol, 1,2-propylene glycol, 1,3-propylene glycol, 1,1-dimethyl-1,2-ethanediol, dipropylene glycol, triethylene glycol, tetraethylene glycol, pentaethylene glycol, tripropylene glycol, 1,4-butanediol, 1,5-pentanediol, neopentyl glycol, neopentyl glycol hydroxypivalate, 2-ethyl-1,3-propanediol, 2-methyl-1,3-propanediol, 2-butyl-2-ethyl-1,3-propanediol, 1,6-hexanediol, 2-methyl-1,5-pentanediol, 2-ethyl-1,4-butanediol, 2-ethyl-1,3-hexanediol, 2,4-diethyl-octane-1,3-diol, 2,2-bis(4-hydroxycyclohexyl)propane, 1,1-, 1,2-, 1,3- and 1,4-bis(hydroxymethyl)cyclohexane, 1,2-, 1,3- or 1,4-cyclohexanediol, glycerol, trimethylolethane, trimethylolpropane, trimethylolbutane, pentaerythritol, ditrimethylolpropane, dipentaerythritol, sorbitol, mannitol, diglycerol, threitol, erythritol, adonitol (ribitol), arabitol (lyxitol), xylitol, dulcitol (galactitol), maltitol, isomalt, poly-THF with a molar weight between 162 and 4500, preferably 250 to 2000, poly-1,3-propanediol or polypropylene glycol with a molar weight between 134 and 2000 or polyethylene glycol with a molar weight between 238 and 2000.

Preference is given to 2-hydroxyethyl acrylate, 2-hydroxyethyl methacrylate, 2- or 3-hydroxypropyl acrylate, 1,4-butanediol monoacrylate or 3-(acryloyloxy)-2-hydroxypropyl acrylate and particular preference to 2-hydroxyethyl acrylate and/or 2-hydroxyethyl methacrylate.

The hydroxyl-bearing monomers are used in the copolymerization in a mixture with other polymerizable monomers, preferably free-radically polymerizable monomers, preferably those composed of more than 50% by weight of C₁-C₂₀, preferably C₁-C₄, alkyl (meth)acrylate, (meth)acrylic acid, vinylaromatics having up to 20 C atoms, vinyl esters of carboxylic acids comprising up to 20 C atoms, vinyl halides, nonaromatic hydrocarbons having 4 to 8 C atoms and 1 or 2 double bonds, unsaturated nitriles and mixtures thereof. Particular preference is given to those polymers composed of more than 60% by weight of C₁-C₁₀ alkyl (meth)acrylates, styrene, vinylimidazole or mixtures thereof.

Above these the polymers may comprise hydroxy-functional monomers in accordance with the above hydroxy group content and, if appropriate, further monomers, examples being (meth)acrylic acid glycidyl epoxy esters, ethylenically unsaturated acids, especially carboxylic acids, acid anhydrides or acid amides.

Further polymers are, for example, polyesterols, as are obtainable by condensing polycarboxylic acids, especially dicarboxylic acids, with polyols, especially diols. In order to ensure a polyester polyol functionality that is appropriate for the polymerization, use is also made in part of triols, tetrols, etc, and also triacids etc.

Polyester polyols are known for example from Ullmanns Enzyklopädie der technischen Chemie, 4th edition, volume 19, pp. 62 to 65. It is preferred to use polyester polyols which are obtained by reacting dihydric alcohols with dibasic carboxylic acids. In lieu of the free polycarboxylic acids it is also possible to use the corresponding polycarboxylic anhydrides or corresponding polycarboxylic esters of lower alcohols or mixtures thereof to prepare the polyester polyols. The polycarboxylic acids may be aliphatic, cycloaliphatic, araliphatic, aromatic or heterocyclic and may if appropriate be substituted, by halogen atoms for example, and/or unsaturated. Examples thereof that may be mentioned include the following:

Oxalic acid, maleic acid, fumaric acid, succinic acid, glutaric acid, adipic acid, sebacic acid, dodecanedioic acid, o-phthalic acid, isophthalic acid, terephthalic acid, trimellitic acid, azelaic acid, 1,4-cyclohexanedicarboxylic acid or tetrahydrophthalic acid, suberic acid, azelaic acid, phthalic anhydride, tetrahydrophthalic anhydride, hexahydrophthalic anhydride, tetrachlorophthalic anhydride, endomethylenetetrahydrophthalic anhydride, glutaric anhydride, maleic anhydride, dimeric fatty acids, their isomers and hydrogenation products, and also esterifiable derivatives, such as anhydrides or dialkyl esters, C₁ C₄ alkyl esters for example, preferably methyl, ethyl or n-butyl esters, of the stated acids are employed. Preference is given to dicarboxylic acids of the general formula HOOC-(CH2)y-COOH, where y is a number from 1 to 20, preferably an even number from 2 to 20, and preferably succinic acid, adipic acid, sebacic acid, and dodecanedicarboxylic acid.

Suitable polyhydric alcohols for preparing the polyesterols include 1,2-propanediol, ethylene glycol, 2,2-dimethyl-1,2-ethanediol, 1,3-propanediol, 1,2-butanediol, 1,3-butanediol, 1,4-butanediol, 3-methylpentane-1,5-diol, 2-ethylhexane-1,3-diol, 2,4-diethyloctane-1,3-diol, 1,6-hexanediol, Poly-THF having a molar mass of between 162 and 4500, preferably 250 to 2000, poly-1,3-propanediol having a molar mass between 134 and 1178, poly-1,2-propanediol having a molar mass between 134 and 898, polyethylene glycol having a molar mass between 106 and 458, neopentyl glycol, neopentyl glycol hydroxypivalate, 2-ethyl-1,3-propanediol, 2-methyl-1,3-propanediol, 2,2-bis(4-hydroxycyclohexyl)propane, 1,1-, 1,2-, 1,3- and 1,4-cyclohexanedimethanol, 1,2-, 1,3-or 1,4-cyclohexanediol, trimethylolbutane, trimethylolpropane, trimethylolethane, neopentyl glycol, pentaerythritol, glycerol, ditrimethylolpropane, dipentaerythritol, sorbitol, mannitol, diglycerol, threitol, erythritol, adonitol (ribitol), arabitol (lyxitol), xylitol, dulcitol (galactitol), maltitol or isomalt, which if appropriate may have been alkoxylated as described above.

Preferred alcohols are those of the general formula HO-(CH₂)ₓ-OH, where x is a number from 1 to 20, preferably an even number from 2 to 20. Preferred are ethylene glycol, butane-1,4-diol, hexane-1,6-diol, octane-1,8-diol and dodecane-1,12-diol. Additionally preferred is neopentyl glycol.

Also suitable, furthermore, are polycarbonate diols of the kind obtainable, for example, by reacting phosgene with an excess of the low molecular mass alcohols specified as synthesis components for the polyester polyols.

Also suitable are lactone-based polyester diols, which are homopolymers or copolymers of lactones, preferably hydroxy-terminated adducts of lactones with suitable difunctional starter molecules. Suitable lactones are preferably those which derive from compounds of the general formula HO-(CH₂)_{z}-COOH, where z is a number from 1 to 20 and where one H atom of a methylene unit may also have been substituted by a C1 to a C4 alkyl radical. Examples are ε-caprolactone, β-propiolactone, gamma-butyrolactone and/or methyl-ε-caprolactone, 4-hydroxybenzoic acid, 6-hydroxy-2-naphthoic acid or pivalolactone, and mixtures thereof. Examples of suitable starter components include the low molecular mass dihydric alcohols specified above as a synthesis component for the polyester polyols. The corresponding polymers of ε-caprolactone are particularly preferred. Lower polyester diols or polyether diols as well can be used as starters for preparing the lactone polymers. In lieu of the polymers of lactones it is also possible to use the corresponding, chemically equivalent polycondensates of the hydroxycarboxylic acids corresponding to the lactones.

Also suitable as polymers, furthermore, are polyetherols, which are prepared by addition reaction of ethylene oxide, propylene oxide or butylene oxide with H-active components. Polycondensates of butanediol are also suitable.

In addition it is possible to use hydroxy-functional carboxylic acids, such as dimethylolpropionic acid or dimethylolbutanoic acid, for example.

The polymers can of course also be compounds containing primary or secondary amino groups.

In one preferred embodiment component B is polypropyleneglycol and/or 1,5-pentanediol.

### Alkoxysilane (C)

A preferred alkoxysilane C corresponds to the formula 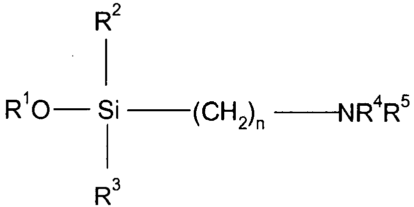 wherein
n is an integer from 1 to 6,
R¹ can be H or C1-C6 alkyl (straight, branched or cyclic),
R² and R³ independently are -OH, OR¹, or C1-C6 alkyl (straight, branched or cyclic),
R⁴ and R⁵ independently are H, C1-C6 alkyl (straight, branched or cyclic), and C1-C6 aminoalkyl or hydroxyalkyl (straight, branched or cyclic);
with the proviso that at least two isocyanate reactive groups are contained in compound C.

In one preferred embodiment the alkoxysilane has a -CH₂CH₂-OH- and /or a - CH₂CH₂-NH₂ group as R⁴ and R⁵

Examples of specific alkoxysilane compounds C are N-(3-(trimethoxysilyl)propyl)ethylenediamine, 1-(3-(trimethoxysilyl)propyl)diethylenetriamine, bis(3-(methylamino)propyl)trimethoxysilane, N-beta-(aminoethyl)-gamma-aminopropyl-trimethoxsilane, N-(2-aminoethyl)-3-aminopropylmethyl-dimethoxysilane, gamma aminopropyltrimethoxysilane, 3-(N-styrylmethyl-2-aminoethylamino) propyl trimethoxysilane, N-phenyl aminomethyl triethoxy silane and bis-(gammatrimethoxysilyl propyl)amine and combinations of the foregoing.

In one preferred embodiment the alkoxysilane compound C is 3-[Bis(2-hydroxyethyl)amino] propyl triethoxysilane] or 3-(2-aminoethylamino)propyl) trimethoxysilane..

The alkoxysilane compound C is typically present in the composition in amounts ranging from to about 0.01 mol % to about 1.00 mol % and preferably from 0.1 to 1 mol %, more preferably from 0.1 to 0.90 mol % based on the total mol % content of the isocyante reactive group content.

### Antimicrobial agents Z

Preferred antimicrobial agents Z having a alkoxysilane moiety are represented by the following formula I 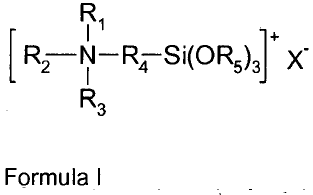 wherein
R₁ is an C1-30 alkyl group, preferably C8-30 alkyl group,
R₂ and R₃, R₄ and R₅ each independently are an C1-3alkyl group or R₂, R₃ and R₅ hydrogen, and
X is a counter ion, such as Cl-, Br-, I- or CH₃COO.

Examples of organosilicon quaternary ammonium salt compounds for use according to the invention are 3-(triethoxysily1)-propyl-dimethyloctadecylammonium chloride, 3-(trimethoxysily1)propyl-methyl-dioctyl ammoniumchloride, 3-(trimethoxysilyl)propyldimethylcecyl ammonium chloride, 3-(trimethoxysily1)-propyl-methyldidecyl ammonium chloride, 3-(trimethoxy-sily1)propyldimethyldodecyl ammonium chloride, 3-(trimethoxysily1)-propyl-methyldidodecyl ammonium chloride, 3-(trimethoxysily1) propyldimethyltetradecyl ammonium chloride, 3-(trimethoxy-sily1)propyl-methyldihexadecyl ammonium chloride, and 3-(trimethoxysilyl)propyl-dimethyloctadecyl ammoniumchloride.

The antimicrobial agent is advantageously present in the composition in amounts from about 0.1% to about 50% fo the dry weight of the composition. Preferred amounts of the agent are 1% to 10% of the composition based upon the dry weight of the composition.

### Catalyst

The reaction between polyisocyanates A and the binder compound B is preferably performed by employing a catalyst.

Nonlimiting examples of suitable catalysts are tertiary amines, such as N,N-dimethylaminoethanol, N,N-dimethyl-cyclohexamine-bis(2-dimethyl aminoethyl) ether, N-ethylmorpholine, N,N,N',N',N"-pentamethyl)-diethylenetriamine, and 1-2 (hydroxypropyl) imidazole, and metallic catalysts, such as tin, stannous octoate, dibutyl tin dilaurate, dioctyl or dibutyl tin dilaurate, dibutyl tin mercaptide, ferric acetylacetonate, lead octoate, and dibutyl tin diricinoleate. The preferred catalyst is tin. The most preferred catalyst is dioctyl or dibutyl tin dilaurate.

### Further components

Preferably, a composition according to the invention further comprises a solvent (D).

Examples of solvents (D) are alcohols, esters, ester alcohols, ethers, ether alcohols, aromatic and/or (cyclo)aliphatic hydrocarbons and their mixtures and halogenated hydrocarbons. Via the amino resins it is also possible to introduce alcohol as well into the mixtures.

Preference is given to alkanoic acid alkyl esters, alkanoic acid alkyl ester alcohols, alkoxylated alkanoic acid alkyl esters and mixtures thereof.

Examples of esters include n-butyl acetate, ethyl acetate, 1-methoxyprop-2-yl acetate and 2-methoxyethyl acetate, and also the monoacetyl and diacetyl esters of ethylene glycol, diethylene glycol, triethylene glycol, propylene glycol, dipropylene glycol or tripropylene glycol, such as butyl glycol acetate, for example. Further examples are carbonates, as well, such as preferably 1,2-ethylene carbonate, 1,2-propylene carbonate or 1,3-propylene carbonate.

Ethers are, for example, tetrahydrofuran (THF), dioxane, and the dimethyl, diethyl or din butyl ethers of ethylene glycol, diethylene glycol, triethylene glycol, propylene glycol, dipropylene glycol or tripropylene glycol.

Alcohols are for example methanol, ethanol, isopropanol, n-propanol, n-butanol, isobutanol, sec-butanol, n-hexanol, n-heptanol, n-octanol, n-decanol, n-dodecanol (lauryl alcohol), 2-ethylhexanol, cyclopentanol or cyclohexanol.

Alkanoic ester alcohols are for example poly(C₂ to C₃) alkylene glycol (C₁ to C₄) monoalkyl ether acetates.
Ether alcohols are for example poly(C₂ to C₃) alkylene glycol di(C₁ to C₄) alkyl ethers, dipropylene glycol dimethyl ether, preferably butyl glycol.

Aromatic hydrocarbon mixtures are those comprising predominantly aromatic C₇ to C₁₄ hydrocarbons and being able to comprise a boiling range from 110 to 300°C, particular preference being given to toluene, o-, m- or p-xylene, trimethylbenzene isomers, tetramethylbenzene isomers, ethylbenzene, cumene, tetrahydronaphthalene and mixtures comprising them.

Examples thereof are the Solvesso® grades from ExxonMobil Chemical, especially Solvesso® 100 (CAS no. 64742-95-6, predominantly C9 and C10 aromatics, boiling range about 154 - 178°C), 150 (boiling range about 182 - 207°C) and 200 (CAS no. 64742-94-5), and also the Shellsol® grades from Shell, Caromax® grades from Petrochem Carless, Caromax® 18, for example, or products from DHC, Hydrosol® A/170, for example. Hydrocarbon mixtures comprising paraffins, cycloparaffins and aromatics are also available commercially under the names Kristalloel (for example, Kristalloel 30, boiling range about 158 - 198°C or Kristalloel 60: CAS no. 64742-82-1), white spirit (likewise, for example CAS no. 64742-82-1) or solvent naphtha (light: boiling range about 155 - 180°C, heavy: boiling range about 225 - 300°C). The aromatics content of such hydrocarbon mixtures is generally more than 90%, preferably more than 95%, more preferably more than 98% and very preferably more than 99% by weight. It may be advisable to use hydrocarbon mixtures having a particularly reduced naphthalene content.

The density at 20°C to DIN 51757 of the hydrocarbons may be less than 1 g/cm³, preferably less than 0.95 and more preferably less than 0.9 g/cm³.

The aliphatic hydrocarbon content is generally less than 5%, preferably less than 2.5% and more preferably less than 1% by weight.

Halogenated hydrocarbons are, for example chlorobenzene and dichlorobenzene or its isomer mixtures.

(Cyclo)aliphatic hydrocarbons are for example decalin, alkylated decalin, and isomer mixtures of linear or branched alkanes and/or cycloalkanes.

Preference is given to n-butyl acetate, ethyl acetate, 1-methoxyprop-2-yl acetate, 2-methoxyethyl acetate, and mixtures thereof.

Mixtures of this kind can be produced in a volume ratio 10:1 to 1:10, preferably in a volume ratio of 5:1 to 1:5 and more preferably in a volume ratio of 1:1, not counting any solvent still comprised in the reaction mixture from the transetherification, and particularly not the alcohols R₁OH and R₂OH.

Preferred examples are butyl acetate/xylene, 1:1 methoxypropyl acetate/xylene, 1:1 butyl acetate/solvent naphtha 100, 1:2 butyl acetate/Solvesso® 100, and 3:1 Kristalloel 30/Shellsol® A.

Alcohols are for example methanol, ethanol, n-propanol, isopropanol, n-butanol, sec-butanol, isobutanol, pentanol isomer mixtures, hexanol isomer mixtures, 2-ethylhexanol or octanol.

Examples of further, typical coatings additives (E) that can be used include antioxidants, stabilizers, activators (accelerants), fillers, pigments, dyes, antistats, flame retardants, thickeners, thixotropic agents, surface-active agents, viscosity modifiers, plasticizers or chelating agents.

Suitable thickeners, besides free-radically (co)polymerized (co)polymers, include typical organic and inorganic thickeners such as hydroxymethylcellulose or bentonite.

Examples of chelating agents that can be used include ethylenediamineacetic acid and its salts, and β-diketones.

Suitable fillers comprise silicates, examples being silicates obtainable by silicon tetrachloride hydrolysis, such as Aerosil® from Degussa, siliceous earth, talc, aluminum silicates, magnesium silicates, calcium carbonates, etc.

Suitable stabilizers comprise typical UV absorbers such as oxanilides, triazines and benzotriazole (the latter available as Tinuvin® grades from Ciba-Spezialitatenchemie) and benzophenones. They can be used alone or together with suitable free-radical scavengers, examples being sterically hindered amines such as 2,2,6,6-tetramethylpiperidine, 2,6-di-tert-butylpiperidine or derivates thereof, e.g., bis(2,2,6,6-tetramethyl-4-piperidyl) sebacate. Stabilizers are used typically in amounts of 0.1% to 5.0% by weight, based on the solid components comprised in the preparation.

Pigments may likewise be comprised. Pigments, according to CD Römpp Chemie Lexikon - Version 1.0, Stuttgart/New York: Georg Thieme Verlag 1995, with reference to DIN 55943, are particulate, organic or inorganic chromatic or achromatic colorants which are virtually insoluble in the application medium.

Virtually insoluble here means a solubility at 25°C of below 1 g/1000 g of application medium, preferably below 0.5, more preferably below 0.25, very preferably below 0.1 and in particular below 0.05 g/1000 g of application medium.

Examples of pigments comprise any desired systems of absorption pigments and/or effect pigments, preferably absorption pigments. There are no restrictions concerning the number and selection of the pigment components. They can be adapted as desired to the particular requirements, such as the desired color impression, for example.

By effect pigments are meant all pigments which exhibit a platelet-shaped construction and impart specific decorative color effects to a surface coating. The effect pigments comprise, for example, all of the effect-imparting pigments which can be employed commonly in vehicle finishing and industrial coating. Examples of effect pigments of this kind are pure metal pigments, such as aluminum, iron or copper pigments; interference pigments, such as titanium dioxide-coated mica, iron oxide-coated mica, mixed oxide-coated mica (e.g., with titanium dioxide and Fe₂O₃ or titanium dioxide and Cr₂O₃), metal oxide-coated aluminum, or liquid-crystal pigments.

The color-imparting absorption pigments are, for example, typical organic or inorganic absorption pigments which can be used in the coatings industry. Examples of organic absorption pigments are azo pigments, phthalocyanine pigments, quinacridone pigments and pyrrolopyrrole pigments. Examples of inorganic absorption pigments are iron oxide pigments, titanium dioxide and carbon black.

The solids content of the coating compositions of the invention is laid down for the purposes of this specification as the ratio of the sum of the components (A), (B) and (C) to the sum of components (A), (B), (C) and (D). In accordance with the invention, said solids content is for example between 25% and 90% by weight, preferably between 40% and 80% by weight.

The components (A) and (B) are typically employed in a ratio of 0.2 : 1 to 5 : 1 (based on the ratio of the NCO groups in (A) to OH groups in (B)), preferably in the ratio of 0.4 : 1 to 3:1, more preferably in the ratio of 0.5 : 1 to 2 : 1, and very preferably in the ratio of 0.8 : 1 to 1.2 : 1.

### Applications

The compositions of this invention are useful as coatings and may in particular be utilized as primers, topcoats or as clearcoats and/or basecoats in clearcoat/basecoat compositions. They are also useful in spray applications.

The compositions lead to fast reacting, durable coatings having extended pot-life and excellent cure. The curable compositions of the present invention provide a clearcoat having improved scratch resistance. The compositions of this invention can in principle also be utilized as adhesives, elastomers and plastics.

The coating materials of the invention are suitable for coating substrates including wood, paper, textile, leather, non-wovens, plastics surfaces, glass, ceramic, mineral building materials such as cement moldings and fiber-cement slabs, coated or uncoated metals. Preference is given to the use of the curable compositions for the coating of plastics or metals, particularly in the form of sheets, more preferably to the coating of surfaces made of metal.

The coating materials of the invention are suitable as interior coatings or in interior coatings, and also - this is preferred - as or in exterior coatings, i.e., applications where they are exposed to daylight, on parts of buildings, coatings on vehicles and aircraft, and for industrial applications. In particular the coating materials of the invention are used as or in automotive clearcoat, basecoat and topcoat materials or primers. Further preferred applications are the use for can coatings and coil coatings.

They are particularly suitable for use as primers, surfacers, pigmented topcoat materials and clearcoat materials in the sectors of industrial, wood, automotive, especially OEM, finishing or decorative coating. The coating compositions are especially suitable for applications where there is a need for particularly high application reliability, external weathering resistance, optical qualities, scratch resistance, solvent resistance and/or chemical resistance.

The substrates are coated with the coating materials of the invention in accordance with conventional techniques which are known to the skilled worker, and which involve applying at least one coating material or coating formulation of the invention to the target substrate in the desired thickness, and removing the volatile constituents of the coating material with heating if appropriate (drying). This operation may, if desired, be repeated one or more times. Application to the substrate may be made in a known way, for example by spraying, troweling, knife coating, brushing, rolling, roller-coating or pouring. The coating thickness is generally in a range from about 3 to 1000 g/m2 and preferably 10 to 200 g/m². Curing may then be carried out.

Curing is generally accomplished by drying the coatings - following application of the coating material to the substrates - at a temperature if appropriate below 80°C, preferably room temperature to 60°C and more preferably room temperature to 40°C, over a period of up to 72 hours, preferably up to 48 hours, more preferably up to 24 hours, very preferably up to 12 hours and in particular up to 6 hours, and subjecting the applied coatings to thermal treatment (curing) under an oxygen-containing atmosphere, preferably air or under inert gas, at temperatures between 80 and 270, preferably between 100 and 240 and, more preferably between 120 and 180°C. Curing of the coating material takes place as a function of the amount of coating material applied and of the crosslinking energy introduced via high-energy radiation, heat transfer from heated surfaces, or via convection of gaseous media, over a period of seconds, for example, in the case of coil coating in combination with NIR drying, up to 5 hours, for example, high-build systems on temperature sensitive materials, usually not less than 10 minutes, preferably not less than 15, more preferably not less than 30, and very preferably not less than 45 minutes. Drying essentially comprises removal of existing solvent, and in addition there may also, even at this stage, be reaction with the binder, whereas curing essentially comprises reaction with the binder.

In addition to or instead of thermal curing, the curing may also take place by means of IR and NIR radiation, with NIR radiation here denoting electromagnetic radiation in the wavelength range from 760 nm to 2.5 µm, preferably from 900 to 1500 nm.

Curing takes place in a time of 1 second to 60 minutes, preferably of 1 minute to 45 minutes.

Examples of suitable substrates for the coating materials of the invention include thermoplastic polymers, especially polymethyl methacrylates, polybutyl methacrylates, polyethylene terephthalates, polybutylene terephthalates, polyvinylidene fluorides, polyvinyl chlorides, polyesters, polyolefins, acrylonitrile-ethylenepropylene-diene-styrene copolymers (A-EPDM), polyetherimides, polyether ketones, polyphenylene sulfides, polyphenylene ethers or mixtures thereof.

Mention may further be made of polyethylene, polypropylene, polystyrene, polybutadiene, polyesters, polyamides, polyethers, polycarbonate, polyvinylacetal, polyacrylonitrile, polyacetal, polyvinyl alcohol, polyvinyl acetate, phenolic resins, urea resins, melamine resins, alkyd resins, epoxy resins or polyurethanes, block or graft copolymers thereof, and blends of these.

Mention may preferably be made of ABS, AES, AMMA, ASA, EP, EPS, EVA, EVAL, HDPE, LDPE, MABS, MBS, MF, PA, PA6, PA66, PAN, PB, PBT, PBTP, PC, PE, PEC, PEEK, PEI, PEK, PEP, PES, PET, PETP, PF, PI, PIB, PMMA, POM, PP, PPS, PS, PSU, PUR, PVAC, PVAL, PVC, PVDC, PVP, SAN, SB, SMS, UF, UP plastics (abbreviated names in accordance with DIN 7728) and aliphatic polyketones.

Particularly preferred substrates are polyolefins, such as PP (polypropylene), which optionally may be isotactic, syndiotactic or atactic and optionally may be unoriented or may have been oriented by uniaxial or biaxial stretching, SAN (styrene-acrylonitrile-copolymers), PC (polycarbonates), PVC (polyvinyl chlorides), PMMA (polymethyl methacrylates), PBT (poly(butylene terephthalate)s), PA (polyamides), ASA (acrylonitrile-styrene-acrylate copolymers) and ABS (acrylonitrile-butadiene-styrene-copolymers), and also their physical mixtures (blends). Particular preferably is given to PP, SAN, ABS, ASA and blends of ABS or ASA with PA or PBT or PC. Especially preferred are polyolefins, PMMA and PVC.

Especially preferred is ASA, particularly in accordance with DE 196 51 350 and the ASA/PC blend. Preference is likewise given to polymethyl methacrylate (PMMA) or impact-modified PMMA.
A further-preferred substrate for coating with the coating materials of the invention are metals. The metals in question are especially those which have already been coated with another coating film, such as with an electrocoat, surfacer, primer or basecoat. These coating films may be solvent-based, water-based or powder coating-based, may be crosslinked, part-crosslinked or thermoplastic, may have been cured through their volume or may have been applied wet-on-wet.

As far as the type of metal is concerned, suitable metals may in principle be any desired metals. In particular, however, they are metals or alloys which are typically employed as metallic materials of construction and require protection against corrosion.

The surfaces in question are in particular those of iron, steel, Zn, Zn alloys, Al or Al alloys. These may be the surfaces of structures composed entirely of the metals or alloys in question. Alternatively the structures may have been only coated with these metals and may themselves be composed of materials of other kinds, such as of other metals, alloys, polymers or composite materials, for example. They may be surfaces of castings made from galvanized iron or steel. In one preferred embodiment of the present invention the surfaces are steel surfaces.

Zn alloys or Al alloys are known to the skilled worker. The skilled worker selects the nature and amount of alloying constituents in accordance with the desired end-use application. Typical constituents of zinc alloys comprise, in particular, Al, Pb, Si, Mg, Sn, Cu or Cd. Typical constituents of aluminum alloys comprise, in particular, Mg, Mn, Si, Zn, Cr, Zr, Cu or Ti. The alloys may also be Al/Zn alloys in which Al and Zn are present in an approximately equal amount. Steel coated with alloys of these kinds is available commercially. The steel may comprise the typical alloying components known to the skilled worker.

Also conceivable is the use of the coating compositions of the invention for treating tinplated iron/steel (tinplate).

The coatings obtainable from the curable compositions according to the invention exhibit excellent antimicrobial properties.

### Examples

In the following examples the following abbreviations are used:
- Quat:: Dimethyloctadecyl [3-(trimethoxysilyl)propyl] ammonium chloride
- AMSI:: 3-[Bis(2-hydroxyethyl)amino] propyl triethoxysilane]
- DIAMO:: N-(2-Aminoethyl)-3-(trimethoxysilyl)propylamine
- HDI:: Hexamethylene diisocyanate
- PPG:: polypropyleneglycol
- PD: 1,5-pentanediol
- IPDI: Isophorone diisocyanate
- DTD:: Dibutyltindilaurate

### Experiment Results

### Synthesis of polyurethane with siloxane moiety

In all the experiments related to the synthesis of polyurethane with siloxane moeity, the ratio of diisocyanate to diol content was maintained at 1.10. The total diol component (PPG and AMSI or PPG and DIAMO) was always kept as 1.0. In order to have different amounts of the siloxane in the final polymer, the AMSI or the DIAMO of diol component was varied between 0.10 and 1.00. The polyurethane samples were characterized by means of standard spectroscopic techniques. Under ambient atmospheric conditions, these samples, crosslink to form an insoluble material.

Example 1 (HPP-A10): 1.0 g (5.95 mmol) of hexamethylene diisocyanate (HDI) and 0.17 g (0.30 mmol) of Dibutyltin dilaurate were dried in a Schlenck flask under vacuum at 50 °C for 2 h. In another flask, Poly(propyleneglycol) (PPG) (4.86g, 4.86 mmol) and 0.17 g (0.55 mmol) of 3-[Bis(2-hydroxyethyl)amino] propyl triethoxysilane] (AMSI) were added and dried in vacuum at 50 °C. After 2h, 15 ml of acetone was added to the flask containing PPG and AMSI. The contents were transferred to another flask and then stirred at 50 °C for another 2 h. The highly viscous polyurethane sample was then dried in vacuum and used for characterization.

Example 2 (HPP-A25): 1.0 g (5.95 mmol) of hexamethylene diisocyanate (HDI) and 0.17 g (0.30 mmol) of Dibutyltin dilaurate were dried in a Schlenck flask under vacuum at 50 °C for 2 h. In another flask, Poly(propyleneglycol) (PPG) (4.05g, 4.05 mmol) and 0.42 g (1.40 mmol) of 3-[Bis(2-hydroxyethyl)amino] propyl triethoxysilane] (AMSI) were added and dried in vacuum at 50 °C. After 2h, 15 ml of acetone was added to the flask containing PPG and AMSI. The contents were transferred to another flask and then stirred at 50 °C for another 2 h. The highly viscous polyurethane sample was then dried in vacuum and used for characterization.

Example 3 (HPP-A50): 1.0 g (5.95 mmol) of hexamethylene diisocyanate (HDI) and 0.17 g (0.30 mmol) of Dibutyltin dilaurate were dried in a Schlenck flask under vacuum at 50 °C for 2 h. In another flask, Poly(propyleneglycol) (PPG) (2.70 g, 2.70 mmol) and 0.84 g (2.70 mmol) of 3-[Bis(2-hydroxyethyl)amino] propyl triethoxysilane] (AMSI) were added and dried in vacuum at 50 °C. After 2h, 15 ml of acetone was added to the flask containing PPG and AMSI. The contents were transferred to another flask and then stirred at 50 °C for another 2 h. The highly viscous polyurethane sample was then dried in vacuum and used for characterization.

Example 4 (HPP-A75): 1.0 g (5.95 mmol) of hexamethylene diisocyanate (HDI) and 0.17 g (0.30 mmol) of Dibutyltin dilaurate were dried in a Schlenck flask under vacuum at 50 °C for 2 h. In another flask, Poly(propyleneglycol) (PPG) (1.35 g, 1.35 mmol) and 1.25 g (4.04 mmol) of 3-[Bis(2-hydroxyethyl)amino] propyl triethoxysilane] (AMSI) were added and dried in vacuum at 50 °C. After 2h, 15 ml of acetone was added to the flask containing PPG and AMSI. The contents were transferred to another flask and then stirred at 50 °C for another 2 h. The highly viscous polyurethane sample was then dried in vacuum and used for characterization.

Example 5 (HPP-A100): 1.0 g (5.95 mmol) of hexamethylene diisocyanate (HDI) and 0.17 g (0.30 mmol) of Dibutyltin dilaurate were dried in a Schlenck flask under vacuum at 50 °C for 2 h. In another flask, 1.67 g (5.40 mmol) of 3-[Bis(2-hydroxyethyl)amino] propyl triethoxysilane] (AMSI) were added and dried in vacuum at 50 °C. After 2h, 15 ml of acetone was added to the flask containing PPG and AMSI. The contents were transferred to another flask and then stirred at 50 °C for another 2 h. The highly viscous polyurethane sample was then dried in vacuum and used for characterization.

Example 6 (HPP-D10): 1.0 g (5.95 mmol) of hexamethylene diisocyanate (HDI) and 0.17 g (0.30 mmol) of Dibutyltin dilaurate were dried in a Schlenck flask under vacuum at 50 °C for 2 h. In another flask, Poly(propyleneglycol) (PPG) (4.86g, 4.86 mmol) and 0.12 g (0. 10 mol) of N-(2-Aminoethyl)-3-(trimethoxysilyl)propylamine (DIAMO) were added and dried in vacuum at 50 °C. After 2h, 15 ml of acetone was added to the flask containing PPG and DIAMO. The contents were transferred to another flask and then stirred at 50 °C for another 2 h. The highly viscous polyurethane sample was then dried in vacuum and used for characterization.

Example 7 (HPP-D25): 1.0 g (5.95 mmol) of hexamethylene diisocyanate (HDI) and 0.17 g (0.30 mmol) of Dibutyltin dilaurate were dried in a Schlenck flask under vacuum at 50 °C for 2 h. In another flask, Poly(propyleneglycol) (PPG) (4.05g, 4.05mmol) and 0.30 g (1.35 mmol) of N-(2-Aminoethyl)-3-(trimethoxysilyl)propylamine (DIAMO) were added and dried in vacuum at 50 °C. After 2h, 15 ml of acetone was added to the flask containing PPG and DIAMO. The contents were transferred to another flask and then stirred at 50 °C for another 2 h. The highly viscous polyurethane sample was then dried in vacuum and used for characterization.

Example 8 (HPP-D50): 1.0 g (5.95 mmol) of hexamethylene diisocyanate (HDI) and 0.17 g (0.30 mmol) of Dibutyltin dilaurate were dried in a Schlenck flask under vacuum at 50 °C for 2 h. In another flask, Poly(propyleneglycol) (PPG) (2.70 g, 2.70 mmol) and 0.60 g (2.70 mmol) of N-(2-Aminoethyl)-3-(trimethoxysilyl)propylamine (DIAMO) were added and dried in vacuum at 50 °C. After 2h, 15 ml of acetone was added to the flask containing PPG and DIAMO. The contents were transferred to another flask and then stirred at 50 °C for another 2 h. The highly viscous polyurethane sample was then dried in vacuum and used for characterization.

Example 9 (HPP-D75): 1.0 g (5.95 mmol) of hexamethylene diisocyanate (HDI) and 0.17 g (0.30 mmol) of Dibutyltin dilaurate were dried in a Schlenck flask under vacuum at 50 °C for 2 h. In another flask, Poly(propyleneglycol) (PPG) (1.35 g, 1.35 mmol) and 0.90 g (4.05 mmol) of N-(2-Aminoethyl)-3-(trimethoxysilyl)propylamine (DIAMO) were added and dried in vacuum at 50 °C. After 2h, 15 ml of acetone was added to the flask containing PPG and DIAMO. The contents were transferred to another flask and then stirred at 50 °C for another 2 h. The highly viscous polyurethane sample was then dried in vacuum and used for characterization.

Example 10 (HPP-D100): 1.0 g (5.95 mmol) of hexamethylene diisocyanate (HDI) and 0.17 g (0.30 mmol) of Dibutyltin dilaurate were dried in a Schlenck flask under vacuum at 50 °C for 2 h. In another flask, 1.27 g (5.70 mmol) of N-(2-Aminoethyl)-3-(trimethoxysilyl)propylamine (DIAMO) was added and dried in vacuum at 50 °C. After 2h, 15 ml of acetone was added to the flask containing PPG and DIAMO. The contents were transferred to another flask and then stirred at 50 °C for another 2 h. The highly viscous polyurethane sample was then dried in vacuum and used for characterization.

Example 11 (BPP-A10): 1.0 g (4.50 mmol) of Isophoronediisocyanate (IPDI) and 0.13 g (0.21 mmol) of Dibutyltin dilaurate were dried in a Schlenck flask under vacuum at 50 °C for 2 h. In another flask, Poly(propyleneglycol) (PPG) (3.68g, 3.68 mmol) and 0.13 g (0.42 mmol) of 3-[Bis(2-hydroxyethyl)amino] propyl triethoxysilane] (AMSI) were added and dried in vacuum at 50 °C. After 2h, 15 ml of acetone was added to the flask containing PPG and AMSI. The contents were transferred to another flask and then stirred at 50 °C for another 2 h. The highly viscous polyurethane sample was then dried in vacuum and used for characterization.

Example 12 (BPP-A25): 1.0 g (4.50 mmol) of Isophoronediisocyanate (IPDI) and 0.13 g (0.21 mmol) of Dibutyltin dilaurate were dried in a Schlenck flask under vacuum at 50 °C for 2 h. In another flask, Poly(propyleneglycol) (PPG) (3.07 g, 3.07 mmol) and 0.32 g (1.0 mmol) of 3-[Bis(2-hydroxyethyl)amino] propyl triethoxysilane] (AMSI) were added and dried in vacuum at 50 °C. After 2h, 15 ml of acetone was added to the flask containing PPG and AMSI. The contents were transferred to another flask and then stirred at 50 °C for another 2 h. The highly viscous polyurethane sample was then dried in vacuum and used for characterization.

Example 13 (BPP-A50): 1.0 g (4.50 mmol) of Isophoronediisocyanate (IPDI) and 0.13 g (0.21 mmol) of Dibutyltin dilaurate were dried in a Schlenck flask under vacuum at 50 °C for 2 h. In another flask, Poly(propyleneglycol) (PPG) (2.05 g, 2.05 mmol) and 0.63 g (2.0 mmol) of 3-[Bis(2-hydroxyethyl)amino] propyl triethoxysilane] (AMSI) were added and dried in vacuum at 50 °C. After 2h, 15 ml of acetone was added to the flask containing PPG and AMSI. The contents were transferred to another flask and then stirred at 50 °C for another 2 h. The highly viscous polyurethane sample was then dried in vacuum and used for characterization.

Example 14 (BPP-A75): 1.0 g (4.50 mmol) of Isophoronediisocyanate (IPDI) and 0.13 g (0.21 mmol) of Dibutyltin dilaurate were dried in a Schlenck flask under vacuum at 50 °C for 2 h. In another flask, Poly(propyleneglycol) (PPG) (1.02 g, 1.02 mmol) and 0.95 g (3.07 mmol) of 3-[Bis(2-hydroxyethyl)amino] propyl triethoxysilane] (AMSI) were added and dried in vacuum at 50 °C. After 2h, 15 ml of acetone was added to the flask containing PPG and AMSI. The contents were transferred to another flask and then stirred at 50 °C for another 2 h. The highly viscous polyurethane sample was then dried in vacuum and used for characterization.

Example 15 (BPP-A100): 1.0 g (4.50 mmol) of Isophoronediisocyanate (IPDI) and 0.13 g (0.21 mmol) of Dibutyltin dilaurate were dried in a Schlenck flask under vacuum at 50 °C for 2 h. In another flask, 1.27 g (4.10 mmol) of 3-[Bis(2-hydroxyethyl)amino] propyl triethoxysilane] (AMSI) were added and dried in vacuum at 50 °C. After 2h, 15 ml of acetone was added to the flask containing PPG and AMSI. The contents were transferred to another flask and then stirred at 50 °C for another 2 h. The highly viscous polyurethane sample was then dried in vacuum and used for characterization.

Example 16 (BPP-D10): 1.0 g (4.50 mmol) of Isophoronediisocyanate (IPDI) and 0.13 g (0.21 mmol) of Dibutyltin dilaurate were dried in a Schlenck flask under vacuum at 50 °C for 2 h. In another flask, Poly(propyleneglycol) (PPG) (3.68 g, 3.68 mmol) and 0.09 g (4.05 mmol) of N-(2-Aminoethyl)-3-(trimethoxysilyl)propylamine (DIAMO) were added and dried in vacuum at 50 °C. After 2h, 15 ml of acetone was added to the flask containing PPG and DIAMO. The contents were transferred to another flask and then stirred at 50 °C for another 2 h. The highly viscous polyurethane sample was then dried in vacuum and used for characterization.

Example 17 (BPP-D25): 1.0 g (4.50 mmol) of Isophoronediisocyanate (IPDI) and 0.13 g (0.21 mmol) of Dibutyltin dilaurate were dried in a Schlenck flask under vacuum at 50 °C for 2 h. In another flask, Poly(propyleneglycol) (PPG) (3.07 g, 3.07 mmol) and 0.23 g (1.07 mmol) of N-(2-Aminoethyl)-3-(trimethoxysilyl)propylamine (DIAMO) were added and dried in vacuum at 50 °C. After 2h, 15 ml of acetone was added to the flask containing PPG and DIAMO. The contents were transferred to another flask and then stirred at 50 °C for another 2 h. The highly viscous polyurethane sample was then dried in vacuum and used for characterization.

Example 18 (BPP-D50): 1.0 g (4.50 mmol) of Isophoronediisocyanate (IPDI) and 0.13 g (0.21 mmol) of Dibutyltin dilaurate were dried in a Schlenck flask under vacuum at 50 °C for 2 h. In another flask, Poly(propyleneglycol) (PPG) (2.05 g, 2.05 mmol) and 0.46 g (2.07 mmol) of N-(2-Aminoethyl)-3-(trimethoxysilyl)propylamine (DIAMO) were added and dried in vacuum at 50 °C. After 2h, 15 ml of acetone was added to the flask containing PPG and DIAMO. The contents were transferred to another flask and then stirred at 50 °C for another 2 h. The highly viscous polyurethane sample was then dried in vacuum and used for characterization.

Example 19 (BPP-D75): 1.0 g (4.50 mmol) of Isophoronediisocyanate (IPDI) and 0.13 g (0.21 mmol) of Dibutyltin dilaurate were dried in a Schlenck flask under vacuum at 50 °C for 2 h. In another flask, Poly(propyleneglycol) (PPG) (1.02 g, 1.02 mmol) and 0.68 g (3.06 mmol) of N-(2-Aminoethyl)-3-(trimethoxysilyl)propylamine (DIAMO) were added and dried in vacuum at 50 °C. After 2h, 15 ml of acetone was added to the flask containing PPG and DIAMO. The contents were transferred to another flask and then stirred at 50 °C for another 2 h. The highly viscous polyurethane sample was then dried in vacuum and used for characterization.

Example 20 (BPP-D100): 1.0 g (4.50 mmol) of Isophoronediisocyanate (IPDI) and 0.13 g (0.21 mmol) of Dibutyltin dilaurate were dried in a Schlenck flask under vacuum at 50 °C for 2 h. In another flask, 0.91 g (4.09 mmol) of N-(2-Aminoethyl)-3-(trimethoxysilyl)propylamine (DIAMO) was added and dried in vacuum at 50 °C. After 2h, 15 ml of acetone was added to the flask containing PPG and DIAMO. The contents were transferred to another flask and then stirred at 50 °C for another 2 h. The highly viscous polyurethane sample was then dried in vacuum and used for characterization.

Example 21 (HPD-A10): 1.0 g (5.95 mmol) of hexamethylene diisocyanate (HDI) and 0.17 g (0.30 mmol) of Dibutyltin dilaurate were dried in a Schlenck flask under vacuum at 50 °C for 2 h. In another flask, Pentanediol (PD) (0.51 g, 4.90 mmol) and 0.17 g (0.55 mmol) of 3-[Bis(2-hydroxyethyl)amino] propyl triethoxysilane] (AMSI) were added and dried in vacuum at 50 °C. After 2h, 15 ml of acetone was added to the flask containing PPG and AMSI. The contents were transferred to another flask and then stirred at 50 °C for another 2 h. The highly viscous polyurethane sample was then dried in vacuum and used for characterization.

Example 22 (HPD-A25): 1.0 g (5.95 mmol) of hexamethylene diisocyanate (HDI) and 0.17 g (0.30 mmol) of Dibutyltin dilaurate were dried in a Schlenck flask under vacuum at 50 °C for 2 h. In another flask, Pentanediol (PD) (0.42 g, 4.0 mmol) and 0.42 g (1.36 mmol) of 3-[Bis(2-hydroxyethyl)amino] propyl triethoxysilane] (AMSI) were added and dried in vacuum at 50 °C. After 2h, 15 ml of acetone was added to the flask containing PPG and AMSI. The contents were transferred to another flask and then stirred at 50 °C for another 2 h. The highly viscous polyurethane sample was then dried in vacuum and used for characterization.

Example 23 (HPD-A50): 1.0 g (5.95 mmol) of hexamethylene diisocyanate (HDI) and 0.17 g (0.30 mmol) of Dibutyltin dilaurate were dried in a Schlenck flask under vacuum at 50 °C for 2 h. In another flask, Pentanediol (PD) (0.28 g, 2.69 mmol) and 0.84 g (2.70 mmol) of 3-[Bis(2-hydroxyethyl)amino] propyl triethoxysilane] (AMSI) were added and dried in vacuum at 50 °C. After 2h, 15 ml of acetone was added to the flask containing PPG and AMSI. The contents were transferred to another flask and then stirred at 50 °C for another 2 h. The highly viscous polyurethane sample was then dried in vacuum and used for characterization.

Example 24 (HPD-A75): 1.0 g (5.95 mmol) of hexamethylene diisocyanate (HDI) and 0.17 g (0.30 mmol) of Dibutyltin dilaurate were dried in a Schlenck flask under vacuum at 50 °C for 2 h. In another flask, Pentanediol (PD) (0.14g, 1.34 mmol) and 1.25 g (4.04 mmol) of 3-[Bis(2-hydroxyethyl)amino] propyl triethoxysilane] (AMSI) were added and dried in vacuum at 50 °C. After 2h, 15 ml of acetone was added to the flask containing PPG and AMSI. The contents were transferred to another flask and then stirred at 50 °C for another 2 h. The highly viscous polyurethane sample was then dried in vacuum and used for characterization.

Example 25 (HPD-D10): 1.0 g (5.95 mmol) of hexamethylene diisocyanate (HDI) and 0.17 g (0.30 mmol) of Dibutyltin dilaurate were dried in a Schlenck flask under vacuum at 50 °C for 2 h. In another flask, Pentanediol (PD) (0.51 g, 4.90 mmol) and 0.12 g (0.54 mmol) of N-(2-Aminoethyl)-3-(trimethoxysilyl)propylamine (DIAMO) were added and dried in vacuum at 50 °C. After 2h, 15 ml of acetone was added to the flask containing PPG and DIAMO. The contents were transferred to another flask and then stirred at 50 °C for another 2 h. The highly viscous polyurethane sample was then dried in vacuum and used for characterization.

Example 26 (HPD-D25): 1.0 g (5.95 mmol) of hexamethylene diisocyanate (HDI) and 0.17 g (0.30 mmol) of Dibutyltin dilaurate were dried in a Schlenck flask under vacuum at 50 °C for 2 h. In another flask, Pentanediol (PD) (0.42 g, 4.0 mmol) and 0.30 g (1.35 mmol) of N-(2-Aminoethyl)-3-(trimethoxysilyl)propylamine (DIAMO) were added and dried in vacuum at 50 °C. After 2h, 15 ml of acetone was added to the flask containing PPG and DIAMO. The contents were transferred to another flask and then stirred at 50 °C for another 2 h. The highly viscous polyurethane sample was then dried in vacuum and used for characterization.

Example 27 (HPD-D50): 1.0 g (5.95 mmol) of hexamethylene diisocyanate (HDI) and 0.17 g (0.30 mmol) of Dibutyltin dilaurate were dried in a Schlenck flask under vacuum at 50 °C for 2 h. In another flask, Pentanediol (PD) (0.28 g, 2.69 mmol) and 0.60 g (2.70 mmol) of N-(2-Aminoethyl)-3-(trimethoxysilyl)propylamine (DIAMO) were added and dried in vacuum at 50 °C. After 2h, 15 ml of acetone was added to the flask containing PPG and DIAMO. The contents were transferred to another flask and then stirred at 50 °C for another 2 h. The highly viscous polyurethane sample was then dried in vacuum and used for characterization.

Example 28 (HPD-D75): 1.0 g (5.95 mmol) of hexamethylene diisocyanate (HDI) and 0.17 g (0.30 mmol) of Dibutyltin dilaurate were dried in a Schlenck flask under vacuum at 50 °C for 2 h. In another flask, Pentanediol (PD) (0.14 g, 1.34 mmol) and 0.90 g (4.05 mmol) of N-(2-Aminoethyl)-3-(trimethoxysilyl)propylamine (DIAMO) were added and dried in vacuum at 50 °C. After 2h, 15 ml of acetone was added to the flask containing PPG and DIAMO. The contents were transferred to another flask and then stirred at 50 °C for another 2 h. The highly viscous polyurethane sample was then dried in vacuum and used for characterization.

Example 29 (BPD-A10): 1.0 g (4.50 mmol) of Isophoronediisocyanate (IPDI) and 0.13 g (0.21 mmol) of Dibutyltin dilaurate were dried in a Schlenck flask under vacuum at 50 °C for 2 h. In another flask, Pentanediol (PD) (0.38g, 3.65 mmol) and 0.13 g (4.20 mmol) of 3-[Bis(2-hydroxyethyl)amino] propyl triethoxysilane] (AMSI) were added and dried in vacuum at 50 °C. After 2h, 15 ml of acetone was added to the flask containing PPG and AMSI. The contents were transferred to another flask and then stirred at 50 °C for another 2 h. The highly viscous polyurethane sample was then dried in vacuum and used for characterization.

Example 30 (BPD-A25): 1.0 g (4.50 mmol) of Isophoronediisocyanate (IPDI) and 0.13 g (0.21 mmol) of Dibutyltin dilaurate were dried in a Schlenck flask under vacuum at 50 °C for 2 h. In another flask, Pentanediol (PD) (0.32 g, 3.10 mmol) and 0.32 g (1.0 mmol) of 3-[Bis(2-hydroxyethyl)amino] propyl triethoxysilane] (AMSI) were added and dried in vacuum at 50 °C. After 2h, 15 ml of acetone was added to the flask containing PPG and AMSI. The contents were transferred to another flask and then stirred at 50 °C for another 2 h. The highly viscous polyurethane sample was then dried in vacuum and used for characterization.

Example 31 (BPD-A50): 1.0 g (4.50 mmol) of Isophoronediisocyanate (IPDI) and 0.13 g (0.21 mmol) of Dibutyltin dilaurate were dried in a Schlenck flask under vacuum at 50 °C for 2 h. In another flask, Pentanediol (PD) (0.21 g, 2.0 mmol) and 0.63 g (2.0 mmol) of 3-[Bis(2-hydroxyethyl)amino] propyl triethoxysilane] (AMSI) were added and dried in vacuum at 50 °C. After 2h, 15 ml of acetone was added to the flask containing PPG and AMSI. The contents were transferred to another flask and then stirred at 50 °C for another 2 h. The highly viscous polyurethane sample was then dried in vacuum and used for characterization.

Example 32 (BPD-A75): 1.0 g (4.50 mmol) of Isophoronediisocyanate (IPDI) and 0.13 g (0.21 mmol) of Dibutyltin dilaurate were dried in a Schlenck flask under vacuum at 50 °C for 2 h. In another flask, Pentanediol (PD) (0.11 g, 1.06 mmol) and 0.95 g (3.07 mmol) of 3-[Bis(2-hydroxyethyl)amino] propyl triethoxysilane] (AMSI) were added and dried in vacuum at 50 °C. After 2h, 15 ml of acetone was added to the flask containing PPG and AMSI. The contents were transferred to another flask and then stirred at 50 °C for another 2 h. The highly viscous polyurethane sample was then dried in vacuum and used for characterization.

Example 33 (BPD-D10): 1.0 g (4.50 mmol) of Isophoronediisocyanate (IPDI) and 0.13 g (0.21 mmol) of Dibutyltin dilaurate were dried in a Schlenck flask under vacuum at 50 °C for 2 h. In another flask, Pentanediol (PD) (0.38 g, 3.65 mmol) and 0.09 g (0.41 mmol) of N-(2-Aminoethyl)-3-(trimethoxysilyl)propylamine (DIAMO) were added and dried in vacuum at 50 °C. After 2h, 15 ml of acetone was added to the flask containing PPG and DIAMO. The contents were transferred to another flask and then stirred at 50 °C for another 2 h. The highly viscous polyurethane sample was then dried in vacuum and used for characterization.

Example 34 (BPD-D25): 1.0 g (4.50 mmol) of Isophoronediisocyanate (IPDI) and 0.13 g (0.21 mmol) of Dibutyltin dilaurate were dried in a Schlenck flask under vacuum at 50 °C for 2 h. In another flask, Pentanediol (PD) (0.32 g, 3.10 mmol) and 0.23 g (1.0 mmol) of N-(2-Aminoethyl)-3-(trimethoxysilyl)propylamine (DIAMO) were added and dried in vacuum at 50 °C. After 2h, 15 ml of acetone was added to the flask containing PPG and DIAMO. The contents were transferred to another flask and then stirred at 50 °C for another 2 h. The highly viscous polyurethane sample was then dried in vacuum and used for characterization.

Example 35 (BPD-D50): 1.0 g (4.50 mmol) of Isophoronediisocyanate (IPDI) and 0.13 g (0.21 mmol) of Dibutyltin dilaurate were dried in a Schlenck flask under vacuum at 50 °C for 2 h. In another flask, Pentanediol (PD) (0.21 g, 2.0 mmol) and 0.46 g (2.07 mmol) of N-(2-Aminoethyl)-3-(trimethoxysilyl)propylamine (DIAMO) were added and dried in vacuum at 50 °C. After 2h, 15 ml of acetone was added to the flask containing PPG and DIAMO. The contents were transferred to another flask and then stirred at 50 °C for another 2 h. The highly viscous polyurethane sample was then dried in vacuum and used for characterization.

Example 36 (BPD-D75): 1.0 g (4.50 mmol) of Isophoronediisocyanate (IPDI) and 0.13 g (0.21 mmol) of Dibutyltin dilaurate were dried in a Schlenck flask under vacuum at 50 °C for 2 h. In another flask, Pentanediol (PD) (0.11 g, 1.06 mmol) and 0.68 g (3.06 mmol) of N-(2-Aminoethyl)-3-(trimethoxysilyl)propylamine (DIAMO) were added and dried in vacuum at 50 °C. After 2h, 15 ml of acetone was added to the flask containing PPG and DIAMO. The contents were transferred to another flask and then stirred at 50 °C for another 2 h. The highly viscous polyurethane sample was then dried in vacuum and used for characterization.

### Crosslinking with antimicrobials and antimicrobial efficacy

Example 37: To 5.0 g of polyurethane (HPP-A50), 1 weight % of antimicrobial agent Quat was added and stirred for 1 h in 50 ml acetone. The contents were then coated on a polycarbonate slide and dried in the oven at 100 °C for 2 h.

Example 38: To 5.0 g of polyurethane (HPP-A50), 5 weight % of antimicrobial agent Quat was added and stirred for 1 h in 50 ml acetone. The contents were then coated on a polycarbonate slide and dried in the oven at 100 °C for 2 h.

Example 39: To 5.0 g of polyurethane (HPP-A50), 10 weight % of antimicrobial agent Quat was added and stirred for 1 h in 50 ml acetone. The contents were then coated on a polycarbonate slide and dried in the oven at 100 °C for 2 h.

Example 40: To 5.0 g of polyurethane (HPP-D50), 1 weight % of antimicrobial agent Quat was added and stirred for 1 h in 50 ml acetone. The contents were then coated on a polycarbonate slide and dried in the oven at 100 °C for 2 h.

Example 41: To 5.0 g of polyurethane (HPP-D50), 5 weight % of antimicrobial agent Quat was added and stirred for 1 h in 50 ml acetone. The contents were then coated on a polycarbonate slide and dried in the oven at 100 °C for 2 h.

Example 42: To 5.0 g of polyurethane (HPP-D50), 10 weight % of antimicrobial agent Quat was added and stirred for 1 h in 50 ml acetone. The contents were then coated on a polycarbonate slide and dried in the oven at 100 °C for 2 h.

Example 43: To 5.0 g of polyurethane (BPP-A50), 1 weight % of antimicrobial agent Quat was added and stirred for 1 h in 50 ml acetone. The contents were then coated on a polycarbonate slide and dried in the oven at 100 °C for 2 h.

Example 44: To 5.0 g of polyurethane (BPP-A50), 5 weight % of antimicrobial agent Quat was added and stirred for 1 h in 50 ml acetone. The contents were then coated on a polycarbonate slide and dried in the oven at 100 °C for 2 h.

Example 45: To 5.0 g of polyurethane (BPP-A50), 10 weight % of antimicrobial agent Quat was added and stirred for 1 h in 50 ml acetone. The contents were then coated on a polycarbonate slide and dried in the oven at 100 °C for 2 h.

Example 46: To 5.0 g of polyurethane (BPP-D50), 1 weight % of antimicrobial agent Quat was added and stirred for 1 h in 50 ml acetone. The contents were then coated on a polycarbonate slide and dried in the oven at 100 °C for 2 h.

Example 47: To 5.0 g of polyurethane (BPP-D50), 5 weight % of antimicrobial agent Quat was added and stirred for 1 h in 50 ml acetone. The contents were then coated on a polycarbonate slide and dried in the oven at 100 °C for 2 h.

Example 48: To 5.0 g of polyurethane (BPP-D50), 10 weight % of antimicrobial agent Quat was added and stirred for 1 h in 50 ml acetone. The contents were then coated on a polycarbonate slide and dried in the oven at 100 °C for 2 h.

Example 49: To 5.0 g of polyurethane (HPD-A50), 1 weight % of antimicrobial agent Quat was added and stirred for 1 h in 50 ml acetone. The contents were then coated on a polycarbonate slide and dried in the oven at 100 °C for 2 h.

Example 50: To 5.0 g of polyurethane (HPD-A50), 5 weight % of antimicrobial agent Quat was added and stirred for 1 h in 50 ml acetone. The contents were then coated on a polycarbonate slide and dried in the oven at 100 °C for 2 h.

Example 51: To 5.0 g of polyurethane (HPD-A50), 10 weight % of antimicrobial agent Quat was added and stirred for 1 h in 50 ml acetone. The contents were then coated on a polycarbonate slide and dried in the oven at 100 °C for 2 h.

Example 52: To 5.0 g of polyurethane (HPD-D50), 1 weight % of antimicrobial agent Quat was added and stirred for 1 h in 50 ml acetone. The contents were then coated on a polycarbonate slide and dried in the oven at 100 °C for 2 h.

Example 53: To 5.0 g of polyurethane (HPD-D50), 5 weight % of antimicrobial agent Quat was added and stirred for 1 h in 50 ml acetone. The contents were then coated on a polycarbonate slide and dried in the oven at 100 °C for 2 h.

Example 54: To 5.0 g of polyurethane (HPD-D50), 10 weight % of antimicrobial agent Quat was added and stirred for 1 h in 50 ml acetone. The contents were then coated on a polycarbonate slide and dried in the oven at 100 °C for 2 h.

Example 55: To 5.0 g of polyurethane (BPD-A50), 1 weight % of antimicrobial agent Quat was added and stirred for 1 h in 50 ml acetone. The contents were then coated on a polycarbonate slide and dried in the oven at 100 °C for 2 h.

Example 56: To 5.0 g of polyurethane (BPD -A50), 5 weight % of antimicrobial agent Quat was added and stirred for 1 h in 50 ml acetone. The contents were then coated on a polycarbonate slide and dried in the oven at 100 °C for 2 h.

Example 57: To 5.0 g of polyurethane (BPD -A50), 10 weight % of antimicrobial agent Quat was added and stirred for 1 h in 50 ml acetone. The contents were then coated on a polycarbonate slide and dried in the oven at 100 °C for 2 h.

Example 58: To 5.0 g of polyurethane (BPD -D50), 1 weight % of antimicrobial agent Quat was added and stirred for 1 h in 50 ml acetone. The contents were then coated on a polycarbonate slide and dried in the oven at 100 °C for 2 h.

Example 59: To 5.0 g of polyurethane (BPD -D50), 5 weight % of antimicrobial agent Quat was added and stirred for 1 h in 50 ml acetone. The contents were then coated on a polycarbonate slide and dried in the oven at 100 °C for 2 h.

Example 60: To 5.0 g of polyurethane (BPD -D50), 10 weight % of antimicrobial agent Quat was added and stirred for 1 h in 50 ml acetone. The contents were then coated on a polycarbonate slide and dried in the oven at 100 °C for 2 h.

### III. Antimicrobial activity measurements

The tests for antimicrobial activity were performed according to Japanese standard JIS Z 2801:2000 - Test for antimicrobial activity and efficacy. Table 1 collates the antimicrobial activity of the polyurethane with differing amounts of antimicrobial.

**Table 1: Antimicrobial activity of polyurethanes with 'Quat' based antimicrobial component**

| Sample No | Antimicrobial | Antimicrobial (Wt %) | Antimicrobial Activity, R | |
|---|---|---|---|---|
| | | | S. aureus | E. coli |
| HPP-A50 | Quat | 1 | 5.7 | 6.1 |
| | | 5 | | |
| | | 10 | 5.7 | 6.1 |
| HPP-D50 | Quat | 1 | 2.9 | 5.1 |
| | | 5 | 3.0 | 2.9 |
| | | 10 | 2.9 | 6.5 |
| HPD-A50 | Quat | 1 | 3.5 | 5.3 |
| | | 5 | 5.7 | 5.7 |
| | | 10 | 3.5 | 5.3 |
| HPD-D50 | Quat | 1 | 6.1 | 5.7 |
| | | 5 | 5.7 | 6.0 |
| | | 10 | 4.8 | 6.1 |
| BPD-A50 | Quat | 1 | 3.0 | 4.7 |
| | | 5 | 3.9 | 6.1 |
| | | 10 | 2.9 | 4.9 |
| BPD-D50 | Quat | 1 | 4.7 | 6.1 |
| | | 5 | 3.6 | 4.8 |
| | | 10 | 5.0 | 6.1 |

## Claims

1. A composition obtainable by reacting in a first step
at least one polyisocyanate A with
at least one binder component B with at least two isocyanate reactive groups and
at least one isocyanate reactive alkoxysilane C thus obtaining a polyurethane containing siloxy groups and
subsequently hydrolysing the siloxy groups in the polyurethane in a second step in the presence of an antimicrobial agent Z which has a siloxy moiety and condensing the hydrolized siloxy groups resulting in the formation of a silica network covalently linked to a polyurethane and to the rest of the antimicrobial agent Z.

2. Composition according to claim 1 wherein the polyisocyanate A is at least one of 1-isocyanato-3,3,5-trimethyl-5-(isocyanatomethyl)-cyclohexane (isophorone diisocyanate), 1,6 diisocyanatohexane, 4,4'-di(isocyanatocyclohexyl)methane, and 3(or 4),8(or 9)-bis(isocyanatomethyl)tricyclo[5.2.1.02,6]decane isomer mixtures.

3. Composition according to at least one of the preceding claims wherein the polyisocyanate A is 1,6 diisocyanatohexane.

4. Composition according to at least one of the preceding claims wherein the binder B is a polyol and/or a polyamine.

5. Composition according to at least one of the preceding claims wherein the binder B is polypropyleneglycol or 1,5-pentanediol.

6. Composition according to at least one of the preceding claims wherein the alkoxysilane C is 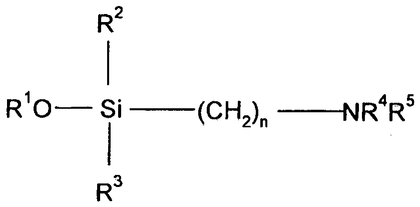 wherein
n is an integer from 1 to 6,
R¹ can be H or C1-C6 alkyl (straight, branched or cyclic),
R² and R³ independently are -OH, OR¹, or C1-C6 alkyl (straight, branched or cyclic),
R⁴ and R⁵ independently are H, C1-C6 alkyl (straight, branched or cyclic), and C1-C6 aminoalkyl or hydroxyalkyl (straight, branched or cyclic);with the proviso that at least two isocyanate reactive groups are contained in compound C.

7. Composition according to claim 1 wherein the alkoxysilane C is at least one of N-(3-(trimethoxysilyl)propyl)ethylenediamine, 1-(3-(trimethoxysilyl)propyl)diethylenetriamine, bis(3-(methylamino)propyl)trimethoxysilane, N-beta-(aminoethyl)-gamma-aminopropyl-trimethoxsilane, N-(2-aminoethyl)-3-aminopropylmethyl-dimethoxysilane, gamma aminopropyltrimethoxysilane, 3-(N-styrylmethyl-2-aminoethylamino) propyl trimethoxysilane, N-phenyl aminomethyl triethoxy silane and bis-(gammatrimethoxysilyl propyl)amine and combinations of the foregoing.

8. Composition according to at least one of the preceding claims wherein the agent Z corresponds to 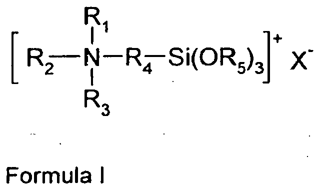 wherein
R₁ is an C1-30 alkyl group, preferably C8-30 alkyl group,
R₂ and R₃, R₄ and R₅ each independently are an C 1-3 alkyl group or R₂, R₃ and R₅ hydrogen, and
X is a counter ion, such as Cl-, Br-, I- or CH₃COO.

9. Composition according to at least one of the preceding claims wherein the polyurethane is a polyurethane-polyurea -silica polymer.

10. Composition according to at least one of the preceding claims wherein the antimicrobial agent Z is present in an amount of 1 to 10 weight % based on the total weight of the composition.

11. A kit comprising a curable composition containing as separate parts
a) at least one polyisocyanate A ,
b) at least one binder component B with at least two isocyanate reactive groups and
at least one isocyanate reactive alkoxysilane C and
c) an antimicrobial agent with a siloxy moiety

12. Process for preparing polyurethane by reacting in a first step at least one polyisocyanate A with
at least one binder component B with at least two isocyanate reactive groups and at least one isocyanate reactive alkoxysilane C thus obtaining a polyurethane and subsequently hydrolysing the siloxy groups in the polyurethane in a second step in the presence of an antimicrobial agent Z which has a siloxy moiety and condensing the hydrolized siloxy groups resulting in the formation of a silica network covalently linked to a polyurethane and to the rest of the antimicrobial agent Z.

13. Silica network covalently linked to a polyurethane and to the rest of an antimicrobial agent Z.

## Patentansprüche

1. Zusammensetzung, erhältlich dadurch, dass man in einem ersten Schritt
wenigstens ein Polyisocyanat A mit
wenigstens einer Binderkomponente B mit wenigstens zwei isocyanat-reaktiven Gruppen und
wenigstens einem isocyanat-reaktiven Alkoxysilan C umsetzt, so dass man ein Siloxygruppen enthaltendes Polyurethan erhält und
anschließend die Siloxygruppen im Polyurethan in einem zweiten Schritt in Gegenwart eines anti-mikrobiellen Agens Z, das eine Siloxygruppierung aufweist, hydrolysiert und die hydrolysierten Siloxygruppen kondensiert, was zur Ausbildung eines mit einem Polyurethan und dem Rest des anti-mikrobiellen Agens Z kovalent verknüpften Siliciumdioxidnetzwerks führt.

2. Zusammensetzung nach Anspruch 1, wobei es sich bei dem Polyisocyanat A um wenigstens eines aus 1-Isocyanato-3,3,5-trimethyl-5-(isocyanatomethyl)-cyclohexan- (Isophorondiisocyanat-), 1,6-Diisocyanatohexan-, 4,4'-Di(isocyanatocyclohexyl)-methan- und 3(oder 4),8(oder 9)-Bis(isocyanatomethyl)tricyclo[5.2.1.0^{2,6}]decan-Isomergemischen handelt.

3. Zusammensetzung nach wenigstens einem der vorhergehenden Ansprüche, wobei es sich bei dem Polyisocyanat A um 1,6-Diisocyanatohexan handelt.

4. Zusammensetzung nach wenigstens einem der vorhergehenden Ansprüche, wobei es sich bei dem Binder B um ein Polyol und/oder ein Polyamin handelt.

5. Zusammensetzung nach wenigstens einem der vorhergehenden Ansprüche, wobei es sich bei dem Binder B um Polypropylenglykol oder 1,5-Pentandiol handelt.

6. Zusammensetzung nach wenigstens einem der vorhergehenden Ansprüche, wobei es sich bei dem Alkoxysilan C um 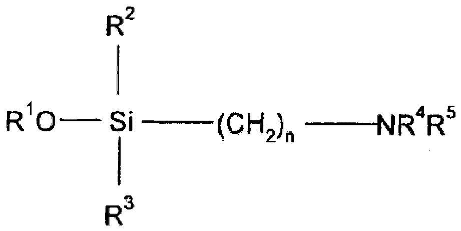 handelt, wobei
n eine ganze Zahl von 1 bis 6 bedeutet,
R¹ für H oder C1-C6-Alkyl (geradlinig, verzweigt oder cyclisch) stehen kann,
R² und R³ unabhängig für -OH, OR¹ oder C1-C6-Alkyl (geradlinig, verzweigt oder cyclisch) stehen können,
R⁴ und R⁵ unabhängig für H, C1-C6-Alkyl (geradlinig, verzweigt oder cyclisch) und C1-C6-Aminoalkyl oder -Hydroxyalkyl (geradlinig, verzweigt oder cyclisch) stehen können; mit der Maßgabe, dass wenigstens zwei isocyanat-reaktive Gruppen in Verbindung C enthalten sind.

7. Zusammensetzung nach Anspruch 1, wobei es sich bei dem Alkoxysilan C um wenigstens eines aus N-(3-(Trimethoxysilyl)propyl)ethylendiamin, 1-(3-(Trimethoxysilyl)propyl)diethylentriamin, Bis(3-(methylamino)propyl)trimethoxysilan, N-Beta-(Aminoethyl)-gamma-aminopropyltrimethoxysilan, N-(2-Aminoethyl)-3-aminopropylmethyldimethoxysilan, Gamma-Aminopropyltrimethoxysilan, 3-(N-Styrylmethyl-2-aminoethylamino)propyltrimethoxysilan, N-Phenylaminomethyltriethoxysilan und Bis-(gamma-trimethoxysilylpropyl)amin und Kombinationen der vorstehenden Verbindungen handelt.

8. Zusammensetzung nach wenigstens einem der vorhergehenden Ansprüche, wobei das Agens Z 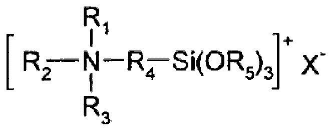 entspricht, wobei
R₁ für eine C1-30-Alkylgruppe, vorzugsweise C8-30-Alkylgruppe steht,
R₂ und R₃, R₄ und R₅ jeweils unabhängig für eine C1-3-Alkylgruppe oder R₂, R₃ und R₅ für Wasserstoff stehen und
X für ein Gegenion, wie Cl-, Br-, I- oder CH₃COO stehen.

9. Zusammensetzung nach wenigstens einem der vorhergehenden Ansprüche, wobei es sich bei dem Polyurethan um ein Polyurethan-Polyharnstoff-Siliciumdioxid-Polymer handelt.

10. Zusammensetzung nach wenigstens einem der vorhergehenden Ansprüche, wobei das antimikrobielle Agens Z in einer Menge von 1 bis 10 Gew.-% bezogen auf das Gesamtgewicht der Zusammensetzung vorliegt.

11. Kit, umfassend eine härtbare Zusammensetzung mit, als getrennten Teilen,
a) wenigstens einem Polyisocyanat A,
b) wenigstens einer Binderkomponente B mit wenigstens zwei isocyanat-reaktiven Gruppen und wenigstens einem isocyanat-reaktiven Alkoxysilan C und
c) einem antimikrobiellen Agens mit einer Siloxygruppierung.

12. Verfahren zur Herstellung von Polyurethan, indem man in einem ersten Schritt wenigstens ein Polyisocyanat A mit
wenigstens einer Binderkomponente B mit wenigstens zwei isocyanat-reaktiven Gruppen und wenigstens einem isocyanat-reaktiven Alkoxysilan C umsetzt, so dass man ein Polyurethan erhält und anschließend die Siloxygruppen im Polyurethan in einem zweiten Schritt in Gegenwart eines anti-mikrobiellen Agens Z, das eine Siloxygruppierung aufweist, hydrolysiert und die hydrolysierten Siloxygruppen kondensiert, was zur Ausbildung eines mit einem Polyurethan und dem Rest des anti-mikrobiellen Agens Z kovalent verknüpften Siliciumdioxidnetzwerks führt.

13. Siliciumdioxidnetzwerk, kovalent verknüpft mit einem Polyurethan und dem Rest eines anti-mikrobiellen Agens Z.

## Revendications

1. Composition pouvant être obtenue en faisant réagir dans une première étape :
au moins un polyisocyanate A avec
au moins un constituant liant B comportant au moins deux groupes réactifs avec les isocyanates et
au moins un alcoxysilane C réactif avec les isocyanates, en obtenant ainsi un polyuréthane contenant des groupes siloxy, et
en hydrolysant ensuite les groupes siloxy dans le polyuréthane dans une deuxième étape en présence d'un agent antimicrobien Z qui comporte une fraction siloxy, et en condensant les groupes siloxy hydrolysés, en entraînant ainsi la formation d'un réseau de silice lié de façon covalente à un polyuréthane et au reste de l'agent antimicrobien Z.

2. Composition selon la revendication 1, dans laquelle le polyisocyanate A est l'un au moins du 1-isocyanato-3,3,5-triméthyl-5-(isocyanatométhyl)cyclohexane (diiocyanate d'isophorone), du 1,6-diisocyanatohexane, du 4,4'-di(isocyanatocyclohexyl)méthane), et de mélanges d'isomères du 3 (ou 4), 8 (ou 9)-bis (isocyanatométhyl) tricyclo [5.2.1.0^{2,6}]décane.

3. Composition selon au moins l'une des revendications précédentes, dans laquelle le polyisocyanate A est le 1,6-diisocyanatohexane.

4. Composition selon au moins l'une des revendications précédentes, dans laquelle le liant B est un polyol et/ou une polyamine.

5. Composition selon au moins l'une des revendications précédentes, dans laquelle le liant B est le polypropylène glycol ou le 1,5-pentanediol.

6. Composition selon au moins l'une des revendications précédentes, dans laquelle l'alcoxysilane C est 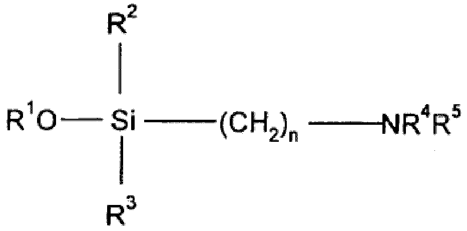 où
n est un nombre entier de 1 à 6,
le groupe R¹ peut être un atome d'hydrogène ou un groupe alkyle C1-C6 (linéaire, ramifié ou cyclique),
les groupes R² et R³ sont indépendamment un groupe -OH, OR¹-, ou alkyle C1-C6 (linéaire, ramifié ou cyclique),
les groupes R⁴ et R⁵ sont indépendamment un atome d'hydrogène, un groupe alkyle C1-C6 (linéaire, ramifié ou cyclique), et un groupe aminoalkyle ou hydroxyalkyle C1-C6 (linéaire, ramifié ou cyclique) ; sous réserve qu'au moins deux groupes réactifs avec les isocyanates soient présents dans le composé C.

7. Composition selon la revendication 1, dans laquelle l'alcoxysilane C est l'un au moins de la N-(3-(triméthoxysilyl)propyl)éthylènediamine, de la 1-(3-(triméthoxysilyl)propyl)diéthylène-triamine, du bis(3-(méthylamino)propyl)triméthoxysilane, du N-bêta-(aminoéthyl)-gamma-aminopropyl-triméthoxysilane, du N-(2-aminoéthyl)-3-aminopropylméthyl-diméthoxysilane, du gamma-aminopropyl-triméthoxysilane, du 3-(N-styrylméthyl-2-aminoéthylamino)propyl-triméthoxysilane, du N-phényl-aminométhyl-triéthoxysilane, et de la bis(gamma-triméthoxysilylpropyl)amine, ainsi que leurs combinaisons.

8. Composition selon au moins l'une des revendications précédentes, dans laquelle l'agent Z correspond à : 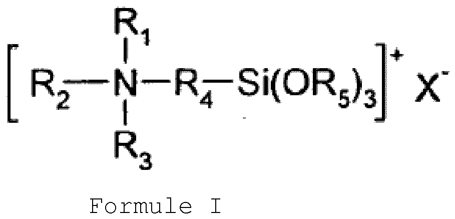 où
le groupe R₁ est un groupe alkyle C1-C30, préférablement un groupe alkyle C8-C30,
les groupes R₂ et R₃, R₄ et R₅ sont chacun indépendamment un groupe alkyle C1-C3 ou les groupes R₂, R₃ et
R₅ est un atome d'hydrogène, et
X est un contre-ion, tel que Cl-, Br-, I- ou CH₃-COO.

9. Composition selon au moins l'une des revendications précédentes, dans laquelle le polyuréthane est un polymère de polyuréthane-polyurée-silice.

10. Composition selon au moins l'une des revendications précédentes, dans laquelle l'agent antimicrobien Z est présent dans une quantité de 1 % à 10 % en poids relativement au poids total de la composition.

11. Kit comprenant une composition durcissable contenant, sous forme de parties distinctes :
a) au moins un polyisocyanate A,
b) au moins un constituant liant B comportant au moins deux groupes réactifs avec les isocyanates et
au moins un alcoxysilane C réactif avec les isocyanates ; et
c) un agent antimicrobien comportant une fraction siloxy.

12. Procédé de fabrication d'un polyuréthane consistant à faire réagir dans une première étape au moins un polyisocyanate A avec
au moins un constituant liant B comportant au moins deux groupes réactifs avec les isocyanates et
au moins un alcoxysilane C réactif avec les isocyanates, en obtenant ainsi un polyuréthane, et en hydrolysant ensuite les groupes siloxy dans le polyuréthane dans une deuxième étape en présence d'un agent antimicrobien Z qui comporte une fraction siloxy, et en condensant les groupes siloxy hydrolysés, en entraînant ainsi la formation d'un réseau de silice lié de façon covalente à un polyuréthane et au reste de l'agent antimicrobien Z.

13. Réseau de silice lié de façon covalente à un polyuréthane et au reste d'un agent antimicrobien Z.
